(19) Europäisches Patentamt
European Patent Office
Office européen des brevets

(11) **EP 3 924 850 B1**

(12) **FASCICULE DE BREVET EUROPEEN**

(45) Date de publication et mention
de la délivrance du brevet:
**28.08.2024 Bulletin 2024/35**

(21) Numéro de dépôt: **20707714.0**

(22) Date de dépôt: **30.01.2020**

(51) Classification Internationale des Brevets (IPC):
***G06F 21/56*** *(2013.01)*

(52) Classification Coopérative des Brevets (CPC):
**G06F 21/561; G06F 21/564; G06F 21/566**

(86) Numéro de dépôt international:
**PCT/FR2020/050142**

(87) Numéro de publication internationale:
**WO 2020/165519 (20.08.2020 Gazette 2020/34)**

(54) **PROCÉDÉ DE CONSTRUCTION DE SIGNATURES COMPORTEMENTALES DE LOGICIELS**

VERFAHREN ZUM ERSTELLEN VERHALTENSIGNATUREN VON PROGRAMMEN

PROCESS OF CONSTRUCTING BEHAVIOUR SIGNATURES OF SOFTWARES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.02.2019 FR 1901530**

(43) Date de publication de la demande:
**22.12.2021 Bulletin 2021/51**

(73) Titulaire: **Orange
92130 Issy-les-Moulineaux (FR)**

(72) Inventeurs:
• **OLIVIER, Baptiste
92326 CHÂTILLON CEDEX (FR)**
• **HAN, Xiao
92326 CHÂTILLON CEDEX (FR)**

(74) Mandataire: **Cabinet Beau de Loménie
158, rue de l'Université
75340 Paris Cedex 07 (FR)**

(56) Documents cités:
**EP-A1- 3 499 396      US-A1- 2011 271 341**

• **ISHAI ROSENBERG ET AL: "Defense Methods Against Adversarial Examples for Recurrent Neural Networks", ARXIV.ORG, CORNELL UNIVERSITY LIBRARY, 201 OLIN LIBRARY CORNELL UNIVERSITY ITHACA, NY 14853, 28 January 2019 (2019-01-28), XP081023825**
• **TAE-UK YUN ET AL: "Malware Variant Classification based on Attention Mechanism and Word2Vec", 31 October 2018 (2018-10-31), XP055638581, Retrieved from the Internet <URL:http://taeuk0329.iptime.org/wordpress/wp -content/uploads/2018/10/Malware_Variant_Clas sification.pdf> [retrieved on 20191104]**

**Description**

La présente invention concerne le domaine du logiciel, et plus précisément le domaine de la construction de signatures comportementales de l'activité de logiciels.

Elle trouve une application particulièrement intéressante dans la détection de logiciels malveillants.

Les logiciels malveillants, ou « malware », constituent une menace majeure dans le monde de l'Internet. De tels logiciels sont habituellement regroupés selon différentes catégories. Ainsi, on connaît les virus, conçus pour se propager en s'insérant dans divers support comme des logiciels légitimes, et qui peuvent perturber plus ou moins gravement le fonctionnement d'un ordinateur infecté. On connaît également les chevaux de Troie, ou « trojan » en anglais, logiciels apparemment légitimes mais qui contiennent une fonctionnalité malveillante destinée à être installée sur un ordinateur à l'insu de l'utilisateur. On connaît aussi les logiciels espions, ou « spyware » en anglais, qui s'installent sur un terminal utilisateur, par exemple un terminal mobile, un ordinateur personnel, et dont le but est de collecter et transférer des informations de l'environnement sur lequel ils sont installés. On connaît aussi les rançongiciels, ou « ransomware » en anglais, qui prennent en otage des données personnelles en chiffrant ces données, puis demandent à leur propriétaire d'envoyer de l'argent en échange de la clé qui peut les déchiffrer.

Des méthodes d'analyse comportementales de l'activité de logiciels malveillants ont été développées dans le but de classifier des logiciels malveillants selon différentes familles, de les détecter, et d'identifier de nouvelles menaces. Une telle méthode est décrite dans la demande de brevet publiée sous le numéro US 2011/0271341. Elle propose de collecter des traces séquentielles d'exécution de logiciels malveillants dans un environnement particulier, sous forme d'événements de type requêtes API au système d'exploitation de la machine sur laquelle ils s'exécutent, puis de normaliser ces traces d'événements en une représentation standard de certains paramètres afin de pouvoir comparer et regrouper l'exécution de différents logiciels malveillants selon différentes familles. Une telle normalisation consiste par exemple à supprimer dans une requête un chemin dans une arborescence, un nom de répertoire ou de fichier, ou à remplacer un paramètre par un méta-caractère (ou « wildcard » en anglais). Cette normalisation est destinée à tenir compte de différentes variantes de logiciels malveillants. Les données obtenues après normalisation sont appelées « séquences de comportement ». La méthode comprend ensuite une étape de regroupement de données, en l'espèce de séquences de comportement. L'étape de regroupement de données, appelée « clusterisation », ou « clustering » en anglais, est destinée à regrouper des séquences de comportement qui appartiennent à une même famille de logiciels malveillants. On obtient ainsi une pluralité de cluster, chacun étant représentatif du comportement d'une même famille de logiciels malveillants. La méthode propose alors d'analyser le cluster ainsi obtenu afin d'identifier des sous-séquences de comportement communes à une famille de logiciels malveillants, et enfin de créer une signature de comportement pour la famille de logiciels malveillants en utilisant cette sous-séquence.

La méthode proposée nécessite, lors de l'étape de normalisation, l'intervention d'un expert du domaine afin de valider les opérations de généralisation, telles qu'une généralisation d'un attribut en un autre. Elle peut être qualifiée de normalisation « métier ». Cette intervention humaine pose un problème dans le cas d'une automatisation et d'un déploiement à grande échelle de cette solution. En effet, les experts métier doivent maintenir à jour la procédure de normalisation selon l'évolution de logiciels malveillants. Les logiciels peuvent aussi appliquer des techniques d'évasion afin de contourner les mesures de sécurité mises en place pour les détecter. Un logiciel malveillant qui met en oeuvre une technique d'évasion est par exemple apte à détecter qu'il s'exécute dans un environnement d'exécution particulier et à générer des séquences d'événements bénignes ou à remplacer des événements par des équivalents. L'utilisation des événements bruts pour construire des signatures ne résiste pas à ces techniques d'attaque.

ISHAI ROSENBERG ET AL: "Defense Methods Against Adversarial Examples for Récurrent Neural Networks", ARXIV.ORG, CORNELL UNIVERSITY LIBRARY, 201 OLIN LIBRARY CORNELL UNIVERSITY ITHACA, NY 14853, 28 janvier 2019, XP081023825, divulgue le plongement de traces d'exécution dans un espace vectoriel, le groupement des vecteurs et l'utilisation des groupements pour déterminer si le logiciel est malveillant ou pas. Tae-Uk Yun ET AL: "Malware Variant Classification based on Attention Mechanism and Word2Vec", 31 octobre 2018, XP055638581, divulgue le plongement de traces d'exécution dans un espace vectoriel et l'application d'un modèle LSTM aux vecteurs. EP 3 499 396 A1 divulgue l'obtention de signatures comportementales contenant directement les séquences de traces d'exécution obtenues

Un des buts de l'invention est de remédier à des insuffisances/inconvénients de l'état de la technique et/ou d'y apporter des améliorations.

A cette fin, l'invention propose un procédé de construction de signatures comportementales de logiciels, mis en oeuvre par un logiciel, ledit procédé comprenant :

- plongement de traces d'exécution d'un ensemble de logiciels dans un espace vectoriel, une trace d'exécution d'un logiciel comprenant au moins un événement et étant représentative de l'exécution du logiciel, ledit plongement étant destiné à représenter un événement de la trace d'exécution par un vecteur encodant un contexte d'apparition de l'événement,
- partitionnement des vecteurs associés aux logiciels de l'ensemble, ledit partitionnement générant au moins un groupe de données, le groupe de données étant représentatif d'un comportement, un label comportemental étant associé audit groupe de données,

- association d'un label comportemental à un vecteur, le label comportemental associé au vecteur étant représentatif du groupe de données auquel appartient le vecteur, et association d'une trace de labels comportementaux à une trace de vecteurs, ladite trace de labels étant représentative de l'exécution d'un logiciel,

- extraction dans la trace de labels d'au moins une signature comportementale associée au logiciel.

La méthode permet d'extraire des signatures comportementales qui correspondent à des sous-séquences de labels comportementaux au lieu de sous-séquences bruts d'appels API communes à un cluster utilisées dans des méthodes connues. Les labels comportementaux sont construits à partir d'algorithmes machine, sans information a priori d'experts métier. En particulier, la construction de ces labels ne nécessite ni l'injection de connaissance métier dans les algorithmes d'apprentissage ni de données labellisées. La méthode repose en effet sur des apprentissages non supervisés uniquement. La méthode apparaît donc ainsi plus complète et plus objective.

Le plongement des événements dans l'espace vectoriel permet de conserver une information sémantique liant les différents événements, c'est-à-dire une information tenant compte de l'agencement logique des différents événements lors de l'exécution d'un logiciel. Ce plongement a pour effet de regrouper des événements sémantiquement proches et donc de faire une généralisation des événements cohérente avec la sémantique des événements ou leur contexte d'apparition. Cet aspect est essentiel car il permet d'abstraire la sémantique d'un événement, notamment d'un événement malveillant, plutôt que de conserver des événements ou des séquences d'événements bruts.

L'utilisation des labels permet d'une part de réduire de façon notable la complexité de calcul dans la construction de signatures caractéristiques de famille de logiciels. En effet, le calcul effectué pour construire les signatures est effectué sur les labels dont le nombre total est négligeable par rapport au nombre total d'événements. D'autre part cela permet, dans le cas de logiciels malveillants, de lutter plus efficacement contre les techniques d'évasion utilisées par les concepteurs de malware, car les signatures qui sont utilisées lors du partitionnement/de la clusterisation dépendent des labels comportementaux, plus génériques que les événements. L'utilisation de labels de comportement, qui tiennent compte du contexte d'exécution d'un événement ajoute une surcouche dans la normalisation qui de ce fait devient plus abstraite. Ainsi, la méthode est moins sensible à des techniques d'évasion. Par exemple, si dans un logiciel malveillant un séquençage d'événements est remplacé par des événements sémantiquement équivalents, la nouvelle séquence ainsi créée se retrouvera dans le même cluster que le séquençage initial.

La méthode étant plus efficace que des méthodes connues dans la lutte contre les techniques d'évasion, elle est plus efficace également, lorsqu'elle est utilisée sur des logiciels malveillants, pour la classification de logiciels malveillants et donc la détection de logiciels malveillants qui repose sur la classification.

Dans un exemple de réalisation, le procédé comprend une collecte des traces d'exécution de l'ensemble des logiciels, un événement d'une trace d'exécution d'un logiciel correspondant à un appel API vers le système d'exploitation d'un serveur hébergeant un environnement maîtrisé d'exécution de logiciels.

La collecte des traces d'exécution se fait dans un environnement protégé. Cela permet, notamment dans le cas d'exécution de logiciels malveillants de limiter les risques pour le système d'exploitation du serveur sur lequel est mise en oeuvre la collecte.

Dans un premier exemple de réalisation, le plongement repose sur l'apprentissage d'un réseau de neurones artificiels cherchant à expliquer un événement d'après son contexte.

Le plongement repose sur une technique éprouvée, en l'espèce la méthode connue sous le nom de « Word2Vec ». Ce plongement préserve les informations relatives au contexte d'apparition des événements. Ainsi, les vecteurs obtenus sont liés comme peuvent l'être les événements issus de l'exécution d'un logiciel, encodant ainsi les activités du logiciel.

Dans un premier exemple de réalisation, l'extraction dans la trace de labels de ladite au moins une signature comportementale associée au logiciel consiste à identifier au moins une signature dite « du premier ordre » telle que : l'exécution d'un logiciel étant représentée par une trace de labels comportementaux, la signature du premier ordre associée au logiciel est un k-gram présent dans la trace de labels comportementaux, c'est-à-dire une suite de taille k de labels successifs compris dans la trace.

Il est extrait des représentations en labels de l'exécution de logiciels des motifs, ou signatures simples, ou signatures du premier ordre, qui encodent des sous-activités du logiciel lors de son exécution. De telles signatures sont destinées à être utilisés pour la construction de combinaisons de signatures, ou signatures « complexes ».

Dans un deuxième exemple de réalisation, l'extraction dans la trace de labels comportementaux d'au moins une signature comportementale d'un ordre au moins égal à deux consiste à combiner au moins deux signatures du premier ordre au moyen d'opérateurs booléens, la combinaison des signatures du premier ordre étant présente dans la trace d'exécution du logiciel.

Cet exemple correspond à l'extraction de combinaisons de signatures simples, ou signatures du premier ordre. La construction de combinaisons de signatures s'inspire des signatures « Yara », qui sont les plus utilisées actuellement dans les systèmes de bacs à sable. De telles signatures sont destinées à détecter des motifs de bytes typiques de certains logiciels malveillants dans des fichiers binaires. Ces motifs typiques sont des combinaisons logiques de suites de bytes particulières. A l'instar des signatures Yara, il est défini des signatures d'ordre quelconque à partir de combinaisons de signatures du premier ordre. Ces signatures sont destinées à être utilisées par exemple dans un système de détection, afin d'identifier des comportements complexes lors de l'exécution de logiciels malveillants.

L'invention concerne également une utilisation du procédé de construction de signatures comportementales de logiciels décrit précédemment, par un module de classification de logiciels, ledit module utilisant une base d'apprentissage de logiciels malveillants étiquetés, une étiquette précisant la famille à laquelle un logiciel malveillant appartient, des signatures caractéristiques des familles de logiciels malveillants étant extraites, un nouveau logiciel étant automatiquement classifier dans une famille de logiciel malveillant en comparant des signatures extraites pour ledit nouveau logiciel à celles caractéristiques des familles.

Le procédé de l'invention peut avantageusement être utilisé pour classifier des logiciels, notamment des logiciels au comportement douteux et pour identifier la famille à laquelle ils appartiennent. La base des signatures extraites avec le procédé de construction de signatures comportementales de logiciels peut avantageusement être utilisée pour mettre en oeuvre un apprentissage supervisé au cours duquel il est recherché les signatures les plus caractéristiques d'une famille de logiciels dans la base d'apprentissage qui comprend un ensemble des logiciels malveillants. Une fois le modèle construit à partir de signatures comportementales appris, il est possible de classifier automatiquement les logiciels au comportement douteux, la classification mettant en difficulté d'éventuelles techniques d'évasion mises en oeuvre dans le logiciel étudié. L'invention concerne aussi une utilisation du procédé de construction de signatures comportementales tel que décrit précédemment, par un module de détection de nouveaux logiciels malveillants, ledit module utilisant une base d'apprentissage complétée comprenant outre des logiciels malveillants, des logiciels bénins, prenant en entrée un nouveau logiciel et détectant une nouvelle menace lorsque le comportement du nouveau logiciel diffère du comportement des logiciels de la base d'apprentissage complétée.

Le procédé de l'invention peut également être avantageusement utilisé pour identifier de nouveaux comportements malveillants, c'est-à-dire des comportements malveillants qui n'ont jusqu'à présent pas été rencontré et qui en tout état de cause ne figurent pas dans la base d'apprentissage des logiciels malveillants. A cette fin, il est construit une nouvelle base d'apprentissage comprenant un ensemble le plus exhaustif possible à la fois de logiciels bénins et de logiciels malveillants connus. Lorsqu'une nouvelle attaque, ou attaque « 0-day », qui utilise un mode d'action différent des logiciels malveillants connus et référencés apparaît, alors un comportement distinct de ceux stockés dans la nouvelle base d'apprentissage est mis en évidence. Il est également possible d'analyser, pour le nouveau type de logiciel malveillant mis en évidence, des similitudes avec des logiciels malveillants connus en comparant les signatures extraites du nouveau logiciel malveillants avec les signatures présente dans la base de signatures associée aux logiciels malveillants connus.

L'invention porte également sur un serveur de construction de signatures comportementales de logiciels, ledit serveur comprenant :

- des moyens de plongement, agencés pour plonger des traces d'exécution d'un ensemble de logiciels dans un espace vectoriel, une trace d'exécution d'un logiciel comprenant au moins un événement et étant représentative de l'exécution du logiciel, ledit plongement étant destiné à représenter un événement de la trace d'exécution par un vecteur encodant un contexte d'apparition de l'événement,
- des moyens de partitionnement, agencés pour partitionner des vecteurs associés aux logiciels de l'ensemble, ledit partitionnement générant au moins un groupe de données, le groupe de données étant représentatif d'un comportement, un label comportemental étant associé audit groupe de données,
- des moyens d'association, agencés pour associer un label comportemental à un vecteur, le label comportemental associé au vecteur étant représentatif du groupe de données auquel appartient le vecteur, et association d'une trace de labels comportementaux à une trace de vecteurs, ladite trace de labels étant représentative de l'exécution d'un logiciel,
- des moyens d'extraction, agencés pour extraire dans la trace de labels d'au moins une signature comportementale associée au logiciel.

L'invention porte également sur un programme d'ordinateur sur un support de données et chargeable dans la mémoire d'un serveur, comprenant des instructions de code de programme destinées à commander l'exécution des étapes du procédé de construction de signatures comportementales de logiciels tel que décrit précédemment, lorsque le programme est exécuté sur ledit serveur.

Enfin, l'invention concerne aussi un support de données dans lequel est enregistré le programme présenté ci-dessus.

D'autres caractéristiques et avantages de la présente invention seront mieux compris de la description et des dessins annexés parmi lesquels :

- La figure 1 présente les étapes d'un procédé de construction de signatures comportementales de logiciel, selon un exemple de réalisation ;

- La figure 2 est une représentation schématique d'un serveur apte à mettre en oeuvre certaines des étapes du procédé de construction de signatures comportementales de logiciels, selon un exemple de réalisation.

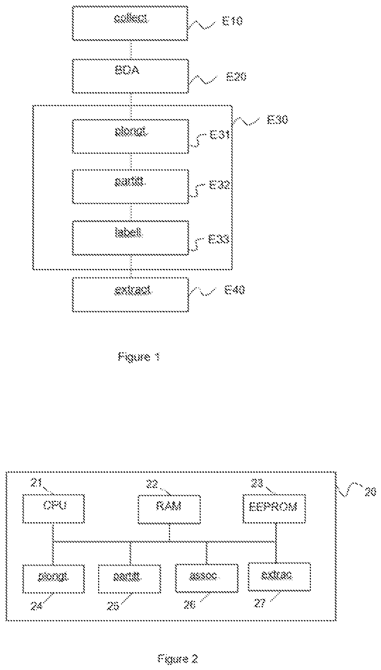

Les étapes d'un procédé de construction de signatures comportementales de logiciels, selon un exemple de réalisation vont maintenant être décrites en relation avec la figure 1.

Le procédé est décrit ici dans le cas d'un logiciel malveillant, il s'applique également à des logiciels que l'on peut qualifier de bénins.

Un serveur hôte 20 (non représenté sur la figure 1) est adapté pour héberger un environnement maîtrisé SB d'exécution de logiciels malveillants (« malware » en anglais). L'environnement SB est agencé pour héberger l'exécution de logiciels malveillants, et pour tracer leur activité au niveau système, par exemple en identifiant et recensant des appels API (de l'anglais « Application Programming Interface ») vers le système d'exploitation, ou « OS » (pour « Operating System ») dédié à cet environnement. Un tel environnement SB est par exemple un environnement virtuel, simulant un système d'exploitation, par exemple Windows. L'environnement SB est habituellement appelé « bac à sable » (ou « SandBox » en anglais). Il constitue un environnement d'exécution particulier qui est maîtrisé, contrôlé, dans lequel les logiciels malveillants s'exécutent, sont observés, et ce sans risque pour le système d'exploitation.

On suppose que dans une étape initiale E10 de collecte d'événements, on dispose d'un ensemble de logiciels malveillants à analyser. Ces logiciels malveillants sont connus, c'est-à-dire que leur type, ou famille, tel que virus, rançongiciel, etc., est identifié. Dans l'étape initiale E10 de collecte d'événements, les logiciels malveillants de l'ensemble s'exécutent dans l'environnement contrôlé SB du serveur 20. L'exécution de chacun des logiciels malveillants génère un fichier comprenant une trace séquentielle d'appels API, ou trace d'événements, ou encore trace d'exécution du logiciel malveillant, comprenant une séquence d'appels API vers le système d'exploitation de l'environnement d'exécution SB. Pour un logiciel malveillant m de l'ensemble, une trace simplifiée d'événements comprend par exemple les événements suivants :

    ProcessEvent : : RUN
    ModuleEvent : : LOAD
    ThreadEvent : : RUN
    MemoryEvent : : ALLOC

Au terme de l'étape E10 de collecte d'événements, on dispose d'un ensemble de fichiers, chacun formant une trace d'exécution d'un logiciel malveillant de l'ensemble et comprenant une trace séquentielle d'événements. A noter que pour un logiciel peuvent correspondre plusieurs traces d'exécution, ces dernières pouvant dépendre à la fois des configurations de la sandbox SB, et de facteurs externes tels qu'un accès à un serveur de commande et de contrôle. Dans une étape suivante E20 de peuplement d'une base de données d'apprentissage, les fichiers comprenant les traces d'exécution générées par les différents logiciels malveillants au cours de l'étape E10 de collecte sont mémorisés dans une base de données d'apprentissage BDA. La base de données d'apprentissage BDA contient donc un ensemble de traces d'exécution, chacune des traces correspondant à l'exécution d'un logiciel malveillant, sous forme d'une suite séquentielle d'événements.

On note $E$ l'ensemble des événements générés lors de l'exécution des logiciels malveillants dans l'environnement maîtrisé SB et mémorisés dans la base de données d'apprentissage BDA. Ainsi $F = \{e_1, e_2, \ldots, e_r\}$, r représentant le nombre total d'événements. On note la trace d'exécution du logiciel malveillant $m$ produite lors de son exécution dans l'environnement maîtrisé SB du serveur S : $(e_1(m), e_2(m), \ldots, e_s(m))$, s représentant le nombre d'événements compris dans la trace d'exécution du logiciel $m$.

Dans une phase suivante E30 de construction de labels de comportements, dans une étape E31 de plongement, l'ensemble $E$ des événements des traces d'exécution associés à l'exécution des logiciels malveillants, et obtenu au cours de l'étape E20 précédente, est plongé dans un espace vectoriel $F$ de petite dimension. C'est-à-dire qu'à chaque événement associé à une trace d'exécution d'un logiciel malveillant, par exemple chaque événement $e_i(m)$, $1 \leq i \leq s$ associé à la trace d'exécution du logiciel malveillant $m$, est associé un vecteur dans l'espace vectoriel $F$. Le plongement des événements des traces d'exécution des logiciels malveillants dans l'espace vectoriel $F$ utilise une technique de plongement lexical mis en oeuvre au moyen d'un algorithme d'apprentissage automatique (ou « machine learning » en anglais) non supervisé, appelé « Word2Vec » et développé par la société Google ; cet algorithme repose sur des réseaux de neurones artificiels entraînés pour reconstruire le contexte linguistique d'un mot. Le principe de Word2Vec est le suivant : à partir d'un gros corpus de textes, apprendre un réseau de neurones artificiel cherchant à expliquer un mot d'après son contexte. Le contexte du mot est habituellement défini comme les mots proches d'un mot cible dans des textes vus pendant l'apprentissage. A l'issue de cette phase, les lignes de la matrice encodant le réseau de neurones forment des vecteurs dont chacun est par construction associé à un mot cible. La particularité de cette technique est que les vecteurs résultant de cet apprentissage encodent la sémantique des contextes des mots rencontrés dans le corpus d'apprentissage. Ainsi, des mots qui partagent des contextes similaires sont représentés par des vecteurs numériques proches et des mots qui sont proches dans leur représentation sont proches sémantiquement. Ce plongement permet d'analyser un mot dans son contexte.

La technique mise en oeuvre dans l'algorithme Word2Vec est utilisée pour plonger les événements des traces d'exécution des logiciels malveillants dans l'espace vectoriel $F$. Par analogie, un événement observé lors de l'exécution d'un logiciel malveillant correspond à un mot, et une trace d'exécution d'un logiciel malveillant correspond à une phrase. Le corpus de texte correspond à l'ensemble des fichiers que l'on a pu générer dans l'environnement maîtrisé SB au cours de l'étape E10 de collecte et qui a servi à alimenter la base d'apprentissage BDA peuplée au cours de l'étape E20 de peuplement.

L'apprentissage automatique associé au plongement dans l'espace vectoriel est mis en oeuvre sur l'ensemble des traces d'exécution des logiciels malveillants de la base d'apprentissage BDA. Cet apprentissage permet d'obtenir un espace vectoriel $F$ de dimension $n$, tel que chaque événement d'une trace d'exécution d'un logiciel malveillant de la base d'apprentissage est représenté par un unique vecteur $v_i$ ayant $n$ coordonnées dans l'espace $F$.

La dimension $n$ de l'espace vectoriel $F$ peut être qualifiée de petite car elle est très inférieure au cardinal de l'ensemble $E$ des événements. En pratique elle est comprise entre 5 et 50. Dans des exemples de réalisation mis en oeuvre, la dimension de l'espace vectoriel $F$ est de l'ordre de 5 à 7.

La particularité de ce plongement est qu'il préserve des informations sur le contexte d'apparition des événements. Ainsi, les vecteurs de l'espace $F$ sont liés comme peuvent l'être les événements de $E$ issus de l'exécution d'un logiciel malveillant, encodant ainsi les activités du logiciel.

Au terme de l'étape E31 de plongement, on obtient un plongement $p : F \rightarrow F$, $p(e_i) = v_i$, pour tout $1 \leq i \leq r$. En particulier, chaque trace d'exécution de la base d'apprentissage BDA peut être traduite en une suite de vecteurs de l'espace vectoriel $F$ via le plongement $p$ : $(e_1(m), e_2(m), ... , e_s(m)) \rightarrow (v_1(m), v_2(m), ... , v_s(m))$, pour tout logiciel malveillant $m$.

Par exemple, une représentation d'événements de la trace d'exécution du logiciel malveillant $m$ en vecteurs, dans le cas où $n = 5$ est :

ProcessEvent : : RUN $\rightarrow$ [0.1, 0.3, 7.8, 0.3, 6.0]
ModuleEvent : : LOAD $\rightarrow$ [0.1, 0.4, 4.5, 7.8, 0.3]

Dans une étape suivante E32 de partitionnement, ou de clustérisation, (ou « clustering » en anglais), il est procédé au partitionnement des vecteurs obtenus lors de l'étape E31 de plongement précédente afin de regrouper des vecteurs similaires.

Le partitionnement de données mis en oeuvre est une technique d'apprentissage (ou « machine learning » en anglais) non supervisée destinée à faire des groupes d'entités similaires. Elle vise à diviser un ensemble de données, ici les vecteurs obtenus lors de l'étape précédente E31, en différents paquets homogènes, en ce sens que les données de chaque paquet, ou sous-ensemble, partagent des caractéristiques communes qui correspondent le plus souvent à des critères de proximité que l'on définit en introduisant des mesures et classes de distance entre les données. Plusieurs algorithmes existent pour mettre en oeuvre un tel partitionnement. Dans un premier exemple de réalisation, l'algorithme de partitionnement en k-moyennes (ou « k-means » en anglais) est utilisé. Le principe de cet algorithme est le suivant : étant donnés des points et un entier k, le problème est de diviser les points en k groupes, appelés cluster, de façon à minimiser l'ensemble des distances entre chaque point et le barycentre du cluster de ce point. L'algorithme de partitionnement en k-moyennes est appliqué aux vecteurs obtenus précédemment. Des tests avec k = 8, 9 ou 10 ont donné des résultats optimaux.

Dans un autre exemple de réalisation, l'algorithme « DBSCAN » (de l'anglais « Density-Based Spatial Clustering of Applications with Noise ») est utilisé. Cet algorithme est un algorithme de partitionnement par densité : il crée des clusters/groupes de données dans les zones denses en points, quitte à ne pas assigner de cluster aux points isolés, qui sont alors appelés « outliers » (« points marginaux » en français).

La combinaison du plongement des événements des traces d'exécution des logiciels malveillants de l'étape E31 avec le partitionnement de l'étape E32 permet de faire des groupes d'événements similaires sémantiquement. On obtient ainsi une généralisation des événements, entièrement produite par les données, qui est opportune pour la supervision des comportements de logiciels malveillants car la généralisation produite encode la sémantique de l'activité des logiciels malveillants. Les étapes de plongement et de partitionnement sont non supervisées, elles ne nécessitent donc aucune information métier, aucune intervention d'expert.

On suppose que l'étape E32 de partitionnement a permis d'obtenir $L$ clusters, ou groupes de données, correspondant à $L$ ensembles de vecteurs représentant chacun des comportements similaires.

Dans une étape suivante E33 de représentation d'un logiciel malveillant en labels comportementaux, il est assigné à chaque vecteur $v_i$ de l'espace $F$ un unique label $l_i$, $l_i \in \{1, 2, ..., L\}$. Ainsi, soit $L$ le nombre total de clusters obtenus à l'issue de l'étape E32 de partitionnement. A chaque vecteur $v_i$ de l'espace $F$ est associé un unique label $l_i$, $l_i \in \{1, 2, ..., L\}$ suivant le cluster, ou groupe de données auquel il appartient. Ainsi, à chaque trace de vecteurs, correspondant à une trace d'exécution d'un logiciel malveillant $m$, est associée une unique trace de labels : $(v_1(m), v_2(m), v_3(m), ..., v_s(m)) \rightarrow (l_1(m), l_2(m), l_3(m), ..., l_s(m))$, pour tout logiciel malveillant $m$.

L'utilisation de labels comportementaux pour représenter l'exécution des logiciels malveillants présente plusieurs avantages. Le nombre $L$ de labels est beaucoup plus petit que la taille de l'ensemble $E$ des

événements : $L \ll |E|$ , où le signe $\|$ représente le cardinal d'un ensemble. Ainsi l'extraction de signatures et la recherche de signatures, décrites ultérieurement, sont beaucoup plus simples en matière de complexité de calcul. Par ailleurs, l'utilisation de labels permet d'éviter certaines techniques d'évasion : la valeur brute de l'événement ne compte plus, seule la sémantique de l'activité importe.

Par exemple, pour le malware $m$, la représentation de sa trace d'exécution simplifiée en labels comportementaux est :

    Process Event : : RUN ---> 1
    ModuleEvent : : LOAD ---> 2
    ProcessEvent : : RUN ---> 1

Dans une étape suivante E40 d'extraction de signatures comportementales, il est procédé à l'extraction de signatures comportementales des logiciels malveillants.

A cet effet, il est défini, pour un logiciel malveillant représenté par une trace de labels comportementaux, un premier type de signature appelée « signature du premier ordre », basée sur des motifs (ou « pattern » en anglais) dits simples. Une telle signature du premier ordre est un k-gram de la trace de labels, c'est-à-dire une suite de taille $k$ de labels successifs présents dans la trace.

Plus formellement, soit le malware $m$ et $R(m) = (l_1(m), l_2(m), \ldots , l_s(m))$ sa représentation en labels comportementaux avec, $l_i(m) \in \{1, 2, \ldots, L\}$, une signature du premier ordre est un k-gram de $R(m)$, c'est-à-dire une suite $p$ de taille $k$ de la forme :

$$ p = (l_i(m), l_{i+1}(m), \ldots, l_{i+k}(m)) $$

Ce k-gram $p$ est appelé par la suite motif du premier ordre ou motif d'ordre 1.

On définit également un deuxième type de signature comme étant une combinaison logique de motifs. Plus formellement, on définit par récurrence des motifs logiques de tous ordres. Ainsi, soit un malware $m,$ et $R(m) = (l_1(m), l_2(m), \ldots , l_s(m))$ sa représentation en labels comportementaux, avec $l_i(m) \in \{1, 2, \ldots, L\}$. Soient $p$ et $p'$ des combinaisons de motifs respectivement d'ordre $\alpha, \beta$. On définit les combinaisons de motifs d'ordre $\alpha + \beta$ présentes dans $R(m)$ par :

- $p + p'$ si les motifs $p$ et $p'$ sont tous les deux présents dans la représentation $R(m)$ en labels comportementaux du logiciel malveillant $m$,
- $p \parallel p'$ si l'un des motifs $p$ ou $p'$ est présent dans la représentation R(m).

On remarque que dans le cas d'une signature du premier ordre de taille $k,$ la combinaison de motifs est le motif lui-même, c'est-à-dire le k-gram. L'ordre d'une combinaison de motifs est le nombre de motifs du premier ordre combinés logiquement pour obtenir une signature.

A titre d'exemple, soient trois motifs simples :

    p1 = (1, 2, 3)
    p2 = (2, 3, 4)
    p3 = (3, 2, 1)

Soit $m$ un malware et $R(m) = (l_1(m), l_2(m), \ldots , l_s(m))$ sa représentation en labels comportementaux, avec $l_i(m) \in \{1, 2, \ldots, s\}$. Alors le logiciel malveillant $m$ possède la signature d'ordre 3, $(p_1 \& p_2) \| p_3$ si :

- il existe $j$ et $j'$ tels que $(1, 2, 3) = (l_j(m), l_{j+1}(m), l_{j+2}(m))$ et $(2, 3, 4) = (l_{j'}(m), l_{j'+1}(m), l_{j'+2}(m))$ ;
- ou il existe $j$ tel que $(3, 2, 1) = (l_j(m), l_{j+1}(m), l_{j+2}(m))$

Ainsi, dans l'étape E40 d'extraction de signatures comportementales, il est extrait les signatures du premier ordre et les signatures d'ordre au moins 2 des représentations en labels comportementaux des traces d'exécution de l'ensemble des logiciels malveillants.

A noter qu'il n'est pas nécessaire de calculer des signatures du premier ordre pour toutes les valeurs de $k.$ En effet lorsque $k$ est trop grand, le motif risque d'être trop spécifique à un petit échantillon de logiciels malveillants et il n'y a pas d'intérêt à rechercher ensuite des motifs trop spécifiques ; dans tous les cas, les motifs qui sont recherchés ensuite sont ceux qui reflètent un comportement reproductible dans plusieurs échantillons logiciels malveillants au comportement similaire.

Au terme de l'étape E40 d'extraction de signatures comportementales de logiciels, on dispose d'un ensemble de signatures ; cet ensemble est composé de signatures du premier ordre et de signatures d'ordre supérieur qui sont caractéristiques du comportement des logiciels malveillants compris dans la base d'apprentissage BDA.

Pour avoir de bons résultats, il a été trouvé par la pratique qu'un corpus initial, correspondant au nombre de traces d'exécution de malware, comprenant 50 fichiers par famille, donnait de bons résultats, c'est-à-dire les signatures extraites et caractérisant les logiciels malveillants d'une famille.

On suppose que dans cet exemple de réalisation, le serveur 20 héberge l'environnement maîtrisé SB, la base d'apprentissage BDA et la mise en oeuvre des étapes du procédé de construction de signatures comportementales de logiciels. Par exemple, le serveur 20 héberge un environnement en cloud computing dans lequel une première machine virtuelle est dédiée à l'environnement maîtrisé SB, une deuxième machine virtuelle est dédiée à la base d'apprentissage DBA et une troisième machine virtuelle est dédiée à la mise en oeuvre des étapes du procédé. Dans un deuxième exemple de réalisation, l'environnement maîtrisé SB est stocké sur un premier serveur distinct du serveur 20 et la base d'apprentissage BDA est stockée sur un deuxième serveur, distinct du serveur 20. Dans un cas particulier de cet exemple de réalisation, les données destinées à peupler la base d'apprentissage BDA sont fournies par un fournisseur de données à un gestionnaire de la base d'apprentissage BDA, par exemple un éditeur de solutions sécurité qui fournit la base d'apprentissage peuplée BDA à un autre acteur, par exemple un gestionnaire de réseau. A noter que dans ce cas les étapes E10 de collecte et E20 de peuplement de la base d'apprentissage sont optionnelles. En effet, la base de données d'apprentissage BDA est alors fournie déjà peuplée, par un éditeur de solutions de sécurité.

Le procédé de construction de signatures comportementales de logiciels est décrit ici dans le cas de logiciels malveillants. Il s'applique tout aussi bien à des logiciels bénins. En effet, il existe également des familles de logiciels bénins qui partagent des caractéristiques communes notamment en ce qui concerne leur comportement qu'il est bon de classifier. Le procédé peut ainsi s'appliquer à ces logiciels bénins, notamment pour qualifier de nouvelles menaces comme décrit ci-dessous. A noter que pour des logiciels bénins, la collecte de traces d'exécution peutêtre mise en oeuvre dans un environnement moins contraint qu'un environnement de type bac à sable classique. Il n'est en effet pas nécessaire d'obtenir ces traces dans un environnement maîtrisé, le risque pour l'environnement en matière de sécurité étant assez faible.

Le procédé de construction de signatures comportementales de logiciels peut avantageusement être utilisé pour classifier des logiciels malveillants dans une famille de logiciels malveillants.

A cette fin, une base BDA' d'apprentissage de logiciels malveillants étiquetés est utilisée. « Etiquetés » signifie qu'à chaque logiciel malveillant de la base est associé le nom de la famille à laquelle il appartient : « virus emotet», « rançongiciel wannacry», « cheval de Troie », etc. Ainsi la base BDA' peut être utilisée par un algorithme d'apprentissage supervisé dédié à la classification de logiciels malveillants. Une fois la base BDA' d'apprentissage de logiciels malveillants étiquetés peuplée, les signatures apprises, ou construites, c'est-à-dire que les opérations du procédé de construction de signatures comportementales de logiciels telles que décrites précédemment son mises en oeuvre sur la base BDA' d'apprentissage de logiciels malveillants étiquetés. Au terme de cet apprentissage une base de signatures qui comprend les signatures extraites à partir des traces de labels comportementaux associés à l'exécution des logiciels malveillants est créée. La base de signatures peut alors être utilisée comme un ensemble de variables lors d'un l'apprentissage supervisé. L'algorithme d'apprentissage cherche automatiquement dans la base de signatures comportementales lesquelles sont les plus caractéristiques d'une famille de logiciels malveillants donnée comprise dans la base d'apprentissage. Le modèle appris, construit à partir des signatures comportementales de logiciels permet la classification automatique de logiciels malveillants. En effet, pour un nouveau logiciel au comportement douteux, les étapes du procédé sont mises en oeuvre et les signatures extraites sont comparées à celles qui caractérisent le mieux les logiciels malveillants de la base BDA' d'apprentissage de logiciels étiquetés. Cette comparaison permet d'identifier la famille à laquelle le nouveau logiciel appartient. A noter que cette classification se fait sans connaissance a priori de la famille à laquelle le nouveau logiciel appartient. La classification est automatique et n'est pas leurrée par d'éventuelles techniques d'évasion mises en oeuvre par les logiciels malveillants car les variables qui sont utilisées, en l'espèce les signatures comportementales, sont par nature résistantes à l'évasion car construites en généralisant la notion d'évènements grâce à son contexte pendant l'exécution.

Le procédé de construction de signatures comportementales de logiciels peut également être avantageusement utilisé pour détecter et qualifier de nouvelles menaces. A cet effet, la base de données d'apprentissage BDA peuplée au moyen d'un ensemble le plus exhaustif possible de traces d'exécution de logiciels malveillants connus au cours de l'étape E20 de peuplement est complétée afin d'obtenir une base d'apprentissage complétée qui comprend, outre les traces d'exécution des logiciels malveillants connus, des traces d'exécution de logiciels bénins. Les étapes du procédé de construction de signatures comportementales sont alors mises en oeuvre sur cette base de données d'apprentissage complétée. Si une nouvelle attaque de type zéro-day (ou «jour zéro »), c'est-à-dire une vulnérabilité n'ayant fait l'objet d'aucune publication ou n'ayant aucun correctif connu, qui utilise un mode d'action différent des menaces connues et répertoriées dans la base d'apprentissage complétée, alors un comportement distincts de ceux stockés dans la base des signatures extraites est mis en évidence ; en effet, de nouvelles signatures propres à cette attaque seront extraites. La prise en compte des traces d'exécution de logiciels bénins est destinée à disposer d'un ensemble de comportements de logiciels le plus exhaustif possible.

Il est par ailleurs possible d'analyser pour ce nouveau logiciel malveillant les similitudes avec les logiciels malveillants connus en comparant les signatures extraites pour le nouveau logiciel malveillant avec celles présentes dans la base de signatures associée aux logiciels malveillants connus.

Un serveur apte à mettre en oeuvre certaines des étapes du procédé de construction de signatures comportementales de logiciels, selon un exemple de réalisation, va maintenant être décrit en relation avec la figure 2.

Le serveur 20 est un équipement informatique qui de manière classique comprend :

- une unité de traitement 21, ou CPU (de l'anglais « Central Processing Unit »), agencée pour exécuter des instructions de code,

- un ensemble de mémoires, dont une mémoire volatile 22 de type RAM (de l'anglais « Random Access Memory »), utilisée pour exécuter des instructions de code, stocker des variables, etc., et une mémoire de stockage 23 de type mémoire flash ou EEPROM (de l'anglais « Eletronically Erasable Programmable Read Only Memory »). La mémoire de stockage 23 est agencée pour mémoriser des données et des applications. En particulier, la mémoire de stockage 23 mémorise un module logiciel de construction de signatures comportementales de logiciels agencé pour mettre en oeuvre les étapes du procédé de construction de signatures comportementales de logiciels qui sont mises en oeuvre par la serveur 20.

Le serveur 20 comprend également :

- un module 24 de plongement, agencé pour plonger des traces d'exécution d'un ensemble de logiciels dans un espace vectoriel, une trace d'exécution d'un logiciel comprenant au moins un événement et étant représentative de l'exécution du logiciel, ledit plongement étant destiné à représenter un événement de la trace d'exécution par un vecteur encodant un contexte d'apparition de l'événement. Le module 24 de plongement est agencé pour mettre en oeuvre l'étape E31 de plongement du procédé de construction de signatures comportementales de logiciels tel que décrit précédemment. Le module de plongement prend en entrée un ensemble de traces d'exécution de logiciels compris dans une base de données d'apprentissage BDA (non représentée sur la figure 2) ;
- un module 25 de partitionnement, agencé pour partitionner des vecteurs associés aux logiciels de l'ensemble, ledit partitionnement générant au moins un groupe de données, le groupe de données étant représentatif d'un comportement, un label comportemental étant associé audit groupe de données. Le module 25 de partitionnement est agencé pour mettre en oeuvre l'étape E32 de partitionnement du procédé de construction de signatures comportementales de logiciels tel que décrit précédemment ;
- un module 26 d'association, agencé pour associer un label comportemental à un vecteur, le label comportemental associé au vecteur étant représentatif du groupe de données auquel appartient le vecteur, et association d'une trace de labels comportementaux à une trace de vecteurs, ladite trace de labels étant représentative de l'exécution d'un logiciel. Le module 26 d'association est agencé pour mettre en oeuvre l'étape E33 de labellisation du procédé de construction de signatures comportementales de logiciels tel que décrit précédemment ;
- un module 27 d'extraction, agencé pour extraire dans la trace de labels d'au moins une signature comportementale associée au logiciel. Le module 27 d'extraction est agencé pour mettre en oeuvre l'étape E34 d'extraction du procédé de construction de signatures comportementales de logiciels tel que décrit précédemment.

Les modules 24 de plongement, 25 de partitionnement, 26 d'association et 27 d'extraction sont de préférence des modules logiciels, agencés pour mettre en oeuvre les étapes E31 de plongement, E32 de partitionnement, E33 d'association et E34 d'extraction du procédé de construction de signatures comportementales de logiciels tel que décrit précédemment.

L'invention concerne donc aussi :

- un programme d'ordinateur comportant des instructions pour la mise en oeuvre du procédé de construction de signatures comportementales de logiciels tel que décrit précédemment lorsque ce programme est exécuté par un processeur du serveur 20, et
- un support d'enregistrement lisible sur lequel est enregistré le programme d'ordinateur décrit ci-dessus.

## Revendications

1. Procédé de construction de signatures comportementales de logiciels, mis en oeuvre par un processeur, ledit procédé comprenant :

      - plongement (E31) de traces d'exécution d'un ensemble de logiciels dans un espace vectoriel, une trace d'exécution d'un logiciel comprenant au moins un événement et étant représentative de l'exécution du logiciel, ledit plongement étant destiné à représenter un événement de la trace d'exécution par un vecteur encodant un contexte d'apparition de l'événement,
      - partitionnement (E32) des vecteurs associés aux logiciels de l'ensemble, ledit partitionnement générant au moins un groupe de données, le groupe de données étant représentatif d'un comportement, un label comportemental étant associé audit groupe de données,
      - association (E33) d'un label comportemental à un vecteur, le label comportemental associé au vecteur étant représentatif du groupe de données auquel appartient le vecteur, et association d'une trace de labels comportementaux à une trace de vecteurs, ladite trace de labels étant représentative de l'exécution d'un logiciel,
      - extraction (E40) dans la trace de labels d'au moins une signature comportementale associée au logiciel.

2. Procédé de construction de signatures comportementales de logiciels selon la revendication 1, comprenant une collecte (E10) des traces d'exécution de l'ensemble des logiciels, un événement d'une trace d'exécution d'un logiciel correspondant à un appel API vers le système d'exploitation d'un serveur hébergeant un environnement maîtrisé d'exécution de logiciels.

3. Procédé de construction de signatures comportementales de l'activité de logiciels selon l'une des revendications précédentes, dans lequel le plongement repose sur l'apprentissage d'un réseau de neurones artificiels cherchant à expliquer un événement d'après son contexte.

4. Procédé de construction de signatures comportementales de l'activité de logiciels selon l'une des revendications précédentes, dans lequel l'extraction dans la trace de labels de ladite au moins une signature comportementale associée au logiciel consiste à identifier au moins une signature dite « du premier ordre » telle que : l'exécution d'un logiciel étant représentée par une trace de labels comportementaux, la signature du premier ordre associée au logiciel est un k-gram présent dans la trace de labels comportementaux, c'est-à-dire une suite de taille k de labels successifs compris dans la trace.

5. Procédé de construction de signatures comportementales de l'activité de logiciels selon la revendication 4, dans lequel l'extraction dans la trace de labels comportementaux d'au moins une signature comportementale d'un ordre au moins égal à deux consiste à combiner au moins deux signatures du premier ordre au moyen d'opérateurs booléens, la combinaison des signatures du premier ordre étant présente dans la trace d'exécution du logiciel.

6. Procédé de construction de signatures comportementales de l'activité de logiciels selon l'une des revendications 1 à 5, le procédé étant utilisé par un module de classification de logiciels, ledit module utilisant une base d'apprentissage de logiciels malveillants étiquetés, une étiquette précisant la famille à laquelle un logiciel malveillant appartient, des signatures comportementales caractéristiques des familles de logiciels malveillants étant extraites, un nouveau logiciel étant automatiquement classifié dans une famille de logiciel malveillant en comparant des signatures extraites pour ledit nouveau logiciel à celles caractéristiques des familles.

7. Procédé de construction de signatures comportementales de l'activité de logiciels selon l'une des revendications 1 à 5, le procédé étant utilisé par un module de détection de nouveaux logiciels malveillants, ledit module utilisant une base d'apprentissage complétée comprenant outre des logiciels malveillants, des logiciels bénins, prenant en entrée un nouveau logiciel et détectant une nouvelle menace lorsque le comportement du nouveau logiciel

differe du comportement des logiciels de la base d'apprentissage complétée.

8. Serveur (20) de construction de signatures comportementales de logiciels, ledit serveur comprenant :

   - des moyens (24) de plongement, agencés pour plonger des traces d'exécution d'un ensemble de logiciels dans un espace vectoriel, une trace d'exécution d'un logiciel comprenant au moins un événement et étant représentative de l'exécution du logiciel, ledit plongement étant destiné à représenter un événement de la trace d'exécution par un vecteur encodant un contexte d'apparition de l'événement,
   - des moyens (25) de partitionnement, agencés pour partitionner des vecteurs associés aux logiciels de l'ensemble, ledit partitionnement générant au moins un groupe de données, le groupe de données étant représentatif d'un comportement, un label comportemental étant associé audit groupe de données,
   - des moyens (26) d'association, agencés pour associer un label comportemental à un vecteur, le label comportemental associé au vecteur étant représentatif du groupe de données auquel appartient le vecteur, et association d'une trace de labels comportementaux à une trace de vecteurs, ladite trace de labels étant représentative de l'exécution d'un logiciel,
   - des moyens (27) d'extraction, agencés pour extraire dans la trace de labels d'au moins une signature comportementale associée au logiciel.

9. Programme d'ordinateur sur un support de données et chargeable dans la mémoire d'un serveur, comprenant des instructions de code de programme destinées à commander l'exécution des étapes du procédé de construction de signatures comportementales de logiciels selon l'une des revendications 1 à 5, lorsque le programme est exécuté sur ledit serveur.

10. Support de données dans lequel est enregistré le programme selon la revendication 9.

**Patentansprüche**

1. Verfahren zum Erstellen von Verhaltenssignaturen von Programmen, das von einem Prozessor durchgeführt wird wobei das Verfahren umfasst:

   - Einbetten (E31) von Ausführungsspuren einer Gruppe von Programmen in einen Vektorraum, wobei eine Ausführungsspur eines Programms mindestens ein Ereignis umfasst und für die Ausführung des Programms repräsentativ ist, wobei das Einbetten dazu bestimmt ist, ein Ereignis der Ausführungsspur durch einen Vektor zu repräsentieren, der einen Auftretenskontext des Ereignisses codiert,

- Partitionieren (E32) der Vektoren, die den Programmen der Gruppe zugeordnet sind, wobei die Partitionierung mindestens einen Datencluster erzeugt, wobei der Datencluster für ein Verhalten repräsentativ ist, wobei ein Verhaltenslabel dem Datencluster zugeordnet ist,

- Zuordnen (E33) eines Verhaltenslabels zu einem Vektor, wobei das dem Vektor zugeordnete Verhaltenslabel für den Datencluster repräsentativ ist, zu dem der Vektor gehört, und Zuordnen einer Spur von Verhaltenslabels zu einer Spur von Vektoren, wobei die Spur von Labels für die Ausführung eines Programms repräsentativ ist,

- Extrahieren (E40), in der Spur von Labels, mindestens einer Verhaltenssignatur, die dem Programm zugeordnet ist.

2. Verfahren zur Erstellung von Verhaltenssignaturen von Programmen nach Anspruch 1, umfassend ein Sammeln (E10) der Ausführungsspuren der Gruppe der Programme, wobei ein Ereignis einer Ausführungsspur eines Programms einem API-Aufruf zu dem Betriebssystem eines Servers entspricht, der eine kontrollierte Umgebung zur Ausführung von Programmen hostet.

3. Verfahren zur Erstellung von Verhaltenssignaturen der Aktivität von Programmen nach einem der vorhergehenden Ansprüche, wobei das Einbetten auf dem Lernen eines künstlichen neuronalen Netzes beruht, das versucht, ein Ereignis anhand seines Kontextes zu erklären.

4. Verfahren zum Erstellen von Verhaltenssignaturen der Aktivität von Programmen nach einem der vorhergehenden Ansprüche, wobei das Extrahieren in der Spur von Labels der mindestens einen Verhaltenssignatur, die dem Programm zugeordnet ist, darin besteht, mindestens eine sogenannte Signatur "der ersten Ordnung" zu identifizieren, so dass: wenn die Ausführung eines Programms durch eine Spur von Verhaltenslabels repräsentiert wird, die Signatur der ersten Ordnung, die dem Programm zugeordnet ist, ein k-gram ist, das in der Spur von Verhaltenslabels vorkommt, d. h. eine Folge mit der Größe k von aufeinander folgenden Labels, die in der Spur enthalten sind.

5. Verfahren zum Erstellen von Verhaltenssignaturen der Aktivität von Programmen nach Anspruch 4, wobei das Extrahieren in der Spur von Verhaltenslabels mindestens einer Verhaltenssignatur einer Ordnung von mindestens zwei darin besteht, mindestens zwei Signaturen der ersten Ordnung mittels Boolescher Operatoren zu kombinieren, wobei die Kombination der Signaturen der ersten Ordnung in der Ausführungsspur des Programms vorhanden ist.

6. Verfahren zum Erstellen von Verhaltenssignaturen der Aktivität von Programmen nach einem der Ansprüche 1 bis 5, wobei das Verfahren von einem Modul zur Klassifikation von Programmen verwendet wird, wobei das Modul eine Lernbasis mit etikettierten bösartigen Programmen verwendet, wobei ein Etikett die Familie angibt, der ein bösartiges Programm angehört, wobei charakteristische Verhaltenssignaturen der Familien bösartiger Programme extrahiert werden, wobei ein neues Programm automatisch in eine Familie bösartiger Programme klassifiziert wird, indem extrahierte Signaturen für das neue Programm mit den für die Familien charakteristischen verglichen werden.

7. Verfahren zum Erstellen von Verhaltenssignaturen der Aktivität von Programmen nach einem der Ansprüche 1 bis 5, wobei das Verfahren von einem Modul zur Erkennung von neuen bösartigen Programmen verwendet wird, wobei das Modul eine komplettierte Lernbasis verwendet, die neben bösartigen Programmen gutartige Programme umfasst, wobei ein neues Programm aufgenommen wird und eine neue Bedrohung erkannt wird, wenn sich das Verhalten des neuen Programms von dem Verhalten der Programme der komplettierten Lernbasis unterscheidet.

8. Server (20) zum Erstellen von Verhaltenssignaturen von Programmen, wobei der Server umfasst:

- Mittel (24) zum Einbetten, die dazu eingerichtet sind, Ausführungsspuren einer Gruppe von Programmen in einen Vektorraum einzubetten, wobei eine Ausführungspur eines Programms mindestens ein Ereignis umfasst und für die Ausführung des Programms repräsentativ ist, wobei das Einbetten dazu bestimmt ist, ein Ereignis der Ausführungsspur durch einen Vektor zu repräsentieren, der einen Auftretenskontext des Ereignisses codiert,

- Mittel (25) zum Partitionieren, die dazu eingerichtet sind, Vektoren, die den Programmen der Gruppe zugeordnet sind, zu partitionieren, wobei die Partitionierung mindestens einen Datencluster erzeugt, wobei der Datencluster für ein Verhalten repräsentativ ist, wobei ein Verhaltenslabel dem Datencluster zugeordnet ist,

- Mittel (26) zum Zuordnen, die dazu eingerichtet sind, ein Verhaltenslabel einem Vektor zuzuordnen, wobei das dem Vektor zugeordnete Verhaltenslabel für den Datencluster repräsentativ ist, zu dem der Vektor gehört, und Zuordnen einer Spur von Verhaltenslabels zu einer Spur von Vektoren, wobei die Spur von Labels für die Ausführung eines Programms repräsentativ ist,
- Mittel (27) zum Extrahieren, die dazu eingerichtet sind, in der Spur von Labels mindestens eine Verhaltenssignatur zu extrahieren, die dem Programm zugeordnet ist.

9. Computerprogramm auf einem Datenträger und in den Speicher eines Servers ladbar, umfassend Programmcodeanweisungen, die dazu bestimmt sind, bei der Ausführung des Programms auf dem Server die Ausführung der Schritte des Verfahrens zum Erstellen von Verhaltenssignaturen von Softwares nach einem der Ansprüche 1 bis 5 zu steuern.

10. Datenträger, in dem das Programm nach Anspruch 9 gespeichert ist.


**Claims**

1. Method for constructing behavioural signatures of software packages, implemented by a processor, said method comprising:

   - embedment (E31) of execution traces of a set of software packages in a vector space, an execution trace of a software package comprising at least one event and being representative of the execution of the software package, said embedment being intended to represent an event of the execution trace with a vector encoding a context of occurrence of the event,
   - cluster analysis (E32) of the vectors associated with the software packages of the set, said cluster analysis generating at least one data group, the data group being representative of a behaviour, a behavioural label being associated with said data group,
   - association (E33) of a behavioural label with a vector, the behavioural label associated with the vector being representative of the data group to which the vector belongs, and association of a behavioural-label trace with a vector trace, said label trace being representative of the execution of a software package,
   - extraction (E40) from the label trace of at least one behavioural signature associated with the software package.

2. Method for constructing behavioural signatures of software packages according to Claim 1, comprising collection (E10) of execution traces of the set of software packages, an event of an execution trace of a software package corresponding to an API call to the operating system of a server hosting a controlled environment for executing software packages.

3. Method for constructing behavioural signatures of the activity of software packages according to one of the preceding claims, wherein the embedment is based on training of an artificial neural network that seeks to explain an event depending on its context.

4. Method for constructing behavioural signatures of the activity of software packages according to one of the preceding claims, wherein the extraction from the label trace of said at least one behavioural signature associated with the software package consists in identifying at least one signature said to be "of the first order", such that: the execution of a software package being represented by a behavioural-label trace, the signature of the first order associated with the software package is a k-gram present in the behavioural-label trace, i.e. a sequences of size k of successive labels comprised in the trace.

5. Method for constructing behavioural signatures of the activity of software packages according to Claim 4, wherein the extraction from the behavioural-label trace of at least one behavioural signature of an order at least equal to two consists in combining at least two signatures of the first order by means of Boolean operators, the combination of the signatures of the first order being present in the execution trace of the software package.

6. Method for constructing behavioural signatures of the activity of software packages according to one of Claims 1 to 5, the method being used by a module for classifying software packages, said module using a training database of tagged malicious software packages, a tag specifying the family to which a malicious software package belongs, behavioural signatures characteristic of families of malicious software packages being extracted, a new software package being automatically classified into a family of malicious software packages by comparing signatures extracted for said new software package with those characteristic of the families.

7. Method for constructing behavioural signatures of the activity of software packages according to one of Claims 1 to 5, the method being used by a module for detecting new malicious software packages, said module using a completed training database comprising, in addition to malicious software packages, benign software packages, this module being fed as input a new software package and detecting a new threat when the behaviour of the new software package differs from the behaviour of the software packages of the completed training database.

8. Server (20) for constructing behavioural signatures of software packages, said server comprising:

- embedding means (24), arranged to embed execution traces of a set of software packages in a vector space, an execution trace of a software package comprising at least one event and being representative of the execution of the software package, said embedment being intended to represent an event of the execution trace with a vector encoding a context of occurrence of the event,

- clustering means (25), arranged to cluster the vectors associated with the software packages of the set, said clustering generating at least one data group, the data group being representative of a behaviour, a behavioural label being associated with said data group,

- associating means (26), arranged to associate a behavioural label with a vector, the behavioural label associated with the vector being representative of the data group to which the vector belongs, and association of a behavioural-label trace with a vector trace, said label trace being representative of the execution of a software package,

- extracting means (27), arranged to extract from the label trace at least one behavioural signature associated with the software package.

9. Computer program on a data medium and loadable into the memory of a server, comprising program-code instructions intended to control the execution of the steps of the method for constructing behavioural signatures of software packages according to one of Claims 1 to 5, when the program is executed on said server.

10. Data medium on which the program according to Claim 9 is stored.

Figure 1

Figure 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110271341 A

- EP 3499396 A1

**Littérature non-brevet citée dans la description**

- Defense Methods Against Adversarial Examples for Récurrent Neural Networks. **ISHAI ROSENBERG et al.** ARXIV.ORG. CORNELL UNIVERSITY LIBRARY, 201 OLIN LIBRARY CORNELL UNIVERSITY, 28 Janvier 2019

- **TAE-UK YUN et al.** *Malware Variant Classification based on Attention Mechanism and Word2Vec,* 31 Octobre 2018